(19) **Europäisches Patentamt / European Patent Office / Office européen des brevets**

(11) **EP 1 981 045 A1**

(12) **EUROPEAN PATENT APPLICATION**
published in accordance with Art. 158(3) EPC

(43) Date of publication:
**15.10.2008 Bulletin 2008/42**

(21) Application number: **06835002.4**

(22) Date of filing: **20.12.2006**

(51) Int Cl.:
*H01G 4/18* (2006.01)    *B32B 15/08* (2006.01)

(86) International application number:
**PCT/JP2006/325332**

(87) International publication number:
**WO 2007/080757 (19.07.2007 Gazette 2007/29)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.01.2006 JP 2006005672**
**14.07.2006 JP 2006193735**

(71) Applicant: **TORAY INDUSTRIES, INC.**
**Tokyo 103-8666 (JP)**

(72) Inventors:
- **MIYAMOTO, Ryo**
  **Shiga 520-2134 (JP)**
- **HIROTA, Kusato**
  **Shiga 520-0822 (JP)**

(74) Representative: **Kador & Partner**
**Corneliusstrasse 15**
**80469 München (DE)**

(54) **METALIZED FILM FOR CAPACITOR AND CAPACITOR USING SUCH FILM**

(57) A metalized film for a capacitor and a capacitor using such film are provided. The metalized film has an excellent withstand voltage that has not been conventionally obtained. The metalized film has a coat layer, which is composed of a silicone composition, and a metal layer, and the layers are laminated in such order from a polymer film side, at last on one side of the polymer film.

EP 1 981 045 A1

**Description**

TECHNICAL FIELD

The present invention relates to a metallized film for a capacitor having an excellent insulation property (hereinafter, may be referred to as voltage resistance) and a capacitor using the same.

BACKGROUND ART

Conventionally, the manufacture of a capacitor having a self-healing property due to the use of a metallized film, which is a polymer film provided with a metallic layer is widely known. For example, there is a known technology for obtaining a capacitor by alternately winding a polyester film and a metallic foil or vapor depositing metal on a film to form a metallic layer, and winding or laminating the resulting layer (Patent Documents 1 and 2).

Further, it is proposed that a capacitor using a polyphenylene sulfide film as a dielectric material of the capacitor and having excellent heat resistance, frequency characteristic and temperature characteristic is provided (Patent Document 3). It is proposed that a capacitor using a polyethylene naphthalate film as a dielectric material of the capacitor and having excellent heat resistance, frequency characteristic and temperature characteristic is provided (Patent Document 4). However, these capacitors are often shorted out before the self healing is achieved when low-voltage breakdown is generated, and consequently the voltage resistance is reduced. Therefore, the application of the capacitors in the high-voltage field is restricted.

In order to solve such a problem, it is proposed that a laminated polyphenylene sulfide film in which a polyester resin and a polyolefin resin are laminated on at least one surface of a polyphenylene sulfide film is used as a capacitor (Patent Documents 5 and 6). However, since the film obtained by laminating these resins has a thick laminated thickness and the laminated polymer is thermally unstable, the melting point of the film is lower than that of the polyphenylene sulfide film and the excellent heat resistance of the polyphenylene sulfide is undermined. Therefore, there is a problem of the reduction in a processing performance of the capacitor.

Patent Document 1: Japanese Patent Application Laid-Open No. 63-182351
Patent Document 2: Japanese Patent Application Laid-Open No. 63-194318
Patent Document 3: Japanese Patent Application Laid-Open No. 57-187327
Patent Document 4: Japanese Patent Application Laid-Open No. 63-140512
Patent Document 5 : Japanese Patent Application Laid-Open No. 2000-218740
Patent Document 6 : Japanese Patent No. 3080268

DISCLOSURE OF THE INVENTION

PROBLEM TO BE SOLVED BY THE INVENTION

Therefore, in view of the background art of the related art, a object of the present invention is to provide a metallized film for a capacitor having excellent voltage resistance and further desirably heat resistance, as well as a capacitor using the same.

MEANS FOR SOLVING THE PROBLEM

The present invention adopts the following constitution in order to solve the problems described in the background art. That is, a metallized film for a capacitor according to the present invention is characterized in that a coating layer including a silicone composition as a constituent and a metallic layer are laminated on at least one surface of a polymer film in this order from the polymer film side.

EFFECT OF THE INVENTION

According to the present invention, the metallized film for a capacitor excellent in a self-healing property can be obtained as described below. Further, according to a preferred aspect of the present invention, a metallized film for a capacitor capable of maintaining the excellent heat resistance and excellent in a self-healing property, while using a polyphenylene sulfide film or polyethylene naphthalate excellent in heat resistance as a dielectric material of the capacitor, can be obtained.

BEST MODE FOR CARRYING OUT THE INVENTION

The inventors of the present invention have conducted a keen examination on a metallized film for a capacitor having a very high self-healing property, and have found out that the problems can be solved at once in the case where a coating layer including a silicone composition which is thermally stable as a constituent is laminated on at least one surface of a polymer film, and a metallic layer is further laminated on the coating layer.

The metallized film for a capacitor is characterized in that the coating layer including the silicone composition as a constituent is provided on at least one surface of the polymer film between the polymer film and the metallic layer.

Here, the silicone composition denotes a resin composition including silicone in an amount of 70% by weight or more, or preferably 85% by weight or more, and the silicone composition may include an organic or inorganic additive, inactive particles or the like in an amount of less than 30% by weight, or preferably less than 15% by weight.

The silicone is a compound in which silicon or silicon and oxygen atoms are included as a skeleton, and an organic group or the like is directly bonded to the silicon atom, and is not particularly limited. Examples of the silicone include silicone oil, silane, silicone rubber, silicone resins, and the like. Among them, a silicone resin having a relatively low molecular weight, for example, amolecularweight of 100 to 5,000, in which a molecular terminal, called a silicone oligomer, is sealed with an alkoxysilyl group is preferably used from the viewpoint of a vapor deposition property. Further, it is preferable, from the viewpoint of productivity, that a double bond is included in side chains or a part of terminal groups of the silicone oligomer. In particular, a methacryl-modified silicone alkoxy oligomer is more preferable from the viewpoint of the hardenability of a coating film by a glow discharge process. The composition and the bonding state of any of these silicone compositions can be analyzed from a peak and an energy shift of each device obtained by the analysis of the surface of the coating layer by means of the XPS (X-ray photoelectron spectroscopy), FT-IR (Fourier Transform Infrared Spectroscopy), FT-NMR (Fourier Transform Nuclear Magnetic Resonance), or the like.

In the present invention, a method of forming a coating layer including a silicone composition as a constituent on the surface of a polymer film is not particularly limited. Examples of the method include a method wherein a coating layer is diluted with an organic solvent and applied by a slit die coater, and the solvent is evaporated so that the coating layer is attached, and a method wherein a heated silicone composition is sprayed out of a nozzle having thin slits or punctuate holes in vacuum, and the like.

In the latter method, in the case where a metallic layer is formed by using a vacuum vapor deposition device, a step of attaching the silicone composition can be provided in the vacuum vapor deposition device, and thus the silicone composition can be sprayed at the same time as the vapor deposition of metal. Therefore, since there is an advantageous in good productivity and the silicone composition can be evenly attached, the latter method is desirable.

Further, another preferable method is a method in which a silicone composition is attached onto a polymer film in a vacuum vapor deposition device, and then the surface to which the silicone composition is attached is subjected to the glow discharge process.

When the surface to which the silicone composition is attached is subj ected to the glow discharge process, the silicone composition is plasma-polymerized or cross-linked, and a three-dimensional network is formed to form a firm silicone film. For this reason, it is considered that the film has a good self-healing property. In addition, it is considered that the process is a key point in whichmetal vapor deposition performance is good when the metal is vapor deposited.

In the present invention, a coating layer and a metallic layer can be provided on only one surface or both surfaces of a polymer film. In the case where a capacitor is produced such that only a metallized film for a capacitor is wound, the metallized film for a capacitor, in which the coating layer and the metallic layer are provided on only one surface of the polymer film, is used. On the other hand, in the case where a capacitor is produced such that a metallized film for a capacitor and a film not provided with a metallic layer are overlapped with each other and wound in the overlapping state, the metallized film for a capacitor, in which the coating layer and the metallic layer are provided on both surfaces of the polymer film, is used.

In the present invention, the thickness of one surface of the coating layer is preferably 1 nm to 500 nm, more preferably 1 nm to 100 nm in terms of heat resistance, and even more preferably 1 nm to 50 nm in terms of electrical characteristics. In the case where a coating layer is provided on only one of the surfaces of the polymer film, the term "thickness of one surface" denotes a thickness of the coating layer on one of the surfaces In the case where coating layers are provided on both surfaces of the polymer film, the term "thickness of one surface" denotes a thicknesses of the each coating layers on both surfaces. The self-healing property, which is the object of the present invention, may not be improved in the case where the thickness of the coating layer is less than 1 nm, while the heat-resistance and electrical characteristics of the polymer film tend to be deteriorated in the case where the thickness exceeds 500 nm.

The metallic layer according to the present invention denotes a layer formed from at least one type of metal selected from Al, Zn, Sn, Ni, Cr, Fe, Cu and Ti, and one type of alloy selected from alloys of these metals. Zn, Al, or the alloy thereof is preferably used in terms of electric characteristics and productivity of the capacitor. More preferably, the metallic layer includes 90% by mass or more of aluminum. Specifically, the aluminum alone or aluminum alloy including 90% by mass or more of aluminum is preferably used from the viewpoint of humidity resistance.

A resistance value of the metallic layer is preferably 0.5 to 100 $\Omega$/square. When the resistance value is less than 0.5$\Omega$/square, capacitor characteristics to be desirably obtained may not be obtained, for example, the self-healing property and insulation resistance may be deteriorated. The resistance value exceeding 100 $\Omega$/square may result in such a tendency that an equivalent resistance is directly increased and a dielectric loss tangent (tan $\delta$) is deteriorated. The resistance value is more preferably 1 to 50 $\Omega$/square, and even more preferably 2 to 30 $\Omega$/square in order to more efficiently exert the effect according to the present invention. The resistance of the metallic layer can be controlled so as to be within the above range by the selection of the metal type and the thickness of the metallic layer.

Examples of the polymer film suitably used in the present invention include: films made of polyesters such as polyethylene terephthalate and polyethylene naphthalate; polyolefin such as polypropylene; polystyrene; polyphenylene sulfide; polyimide; polycarbonate; polyamide; polyvinyliden fluoride; polyparaxylene; and the like. Further, copolymers of these substances, and mixtures and laminated bodies of these substances and other organic polymers may be used. These high molecular compounds may include a publicly-known additive, for example, a lubricant or a plasticizer.

A main constituent of the polymer film used in the present invention is preferably a substance selected from polyester, polyolefin, and polyphenylene sulfide in view of the electric characteristics of the capacitor. In order to more efficiently exert the effect according to the present invention, a polymer having a melting temperature of 150°C or more is preferably used, a polymer having a melting temperature of 200°C or more is more preferably used, and a polymer having a melting temperature of 250°C or more is even more preferably used as the main constituent. Therefore, among the mentioned polymers, polyphenylene sulfide or polyethylene naphthalate, which is the polymer having a melting temperature of 150°C or more, is particularly preferable. The capacitor in which a polyphenylene sulfide film or polyethylene naphthalate is used as its dielectric material, is excellent in its heat resistance, frequency characteristic and temperature characteristic, however, inferior in its self-healing property. Therefore, the application of the capacitor in the high-voltage field is restricted. When the layer in which the silicone composition is used is laminated on the polyphenylene sulfide film or polyethylene naphthalate, the capacitor film excellent in its self-healing property and capable of maintaining excellent heat resistance of the polyphenylene sulfide or polyethylene naphthalate can be provided. The main constituent in this specification refers to a constituent which has an amount of 50% by mass or more relative to the entire polymer film.

A preferable aspect of a method of producing the metallized film for a capacitor according to the present invention will be described below, however, the present invention is not limited thereto. A polymer film is unwound from an winding shaft in a vacuum vapor deposition device, a container provided with a nozzle having thin slits or continuous holes is provided in front of a cooling drum, and a silicone composition, which forms a coating layer, is heated therein and thereby evaporated and sprayed. When the nozzle is directed toward the polymer film, the coating layer is formed on the surface. Then, the surface to which the silicone composition is attached is subjected to the glow discharge process in vacuum, and the polymer film is guided to the cooling drum. While the polymer film is cooled down on the cooling drum, and a vapor deposition source is heated and melted by means of an electrical induction heating, resistance heating or electronic beaming so that the metal coming therefrom is vapor deposited on the polymer film. The vapor deposited film is taken up by the winding shaft of the vapor deposition device, which is an intermediate product. The intermediate product is slit in a predetermined width so that a reel-shape film is obtained. In the glow discharge process, gas is locally introduced into an electrode periphery. Though the type of the gas is not particularly limited, examples thereof include $O_2$, Ar, CO, $CO_2$ and the like. $O_2$, Ar or mixed gas including at least one thereof is preferably used.

The processing current density is preferably 15W·min/m$^2$ in order to efficiently exert the effect according to the present invention.

As the electrode for the glow discharge is preferably used a Cu, aluminum or stainless electrode. In order to control the characteristics so as to be within the range according to the present invention, a pulse DC power source is preferably used as the power source for the glow discharge, and the frequency is preferably set to 200 to 500 kHz. The film for the capacitor thus obtained is laminated or wound according to the publicly-knownmethod, and the capacitor can be thereby obtained.

The method of producing the capacitor in which the metallized film for a capacitor according to the present invention is used will be described below.

In the case where a metallic foil is used as an internal electrode of the capacitor, the coating layer formed from the silicone composition is formed on the polymer film as described above. The polymer film provided with the coating layer thereon and the metallic foil are alternately overlapped and taken up with each other, for example, in such a manner that a foil sticks out or in such a manner that a tab is inserted during the winding process, so that the metallized film for a capacitor according to the present invention is formed, and the overlapping result is wound in such a manner that the electrode can be drawn outward, so that a capacitor device or a capacitor mother device is obtained.

In the case where a metallic thin film is used as the internal electrode of the capacitor, the coating layer formed from the silicone composition is formed on the polymer film as described above. Then, the metallic thin film, which formes the metallic layer, is laminated on the coating layer so that the metallized film for a capacitor according to the present invention is formed. A method of the metallization is preferably a method wherein vapor deposition is adopted. The metal to be vapor deposited is preferably metal including aluminum or zinc as its main constituent. In the case of the metallization, it is preferable to provide a non-metallized part (so-called margin) by means of a tape mask, oil margin, laser beam or the like in order to prevent the opposing electrodes from short-circuiting relative to each other. The film may be slit into thin tapes so that the non-metallized part is located on one end.

A typically adopted method of obtaining the capacitor of winding type, the metallized film for a capacitor is slit into the thin tapes so that the non-metallized part is located on one end, and the two films are overlapped with each other so that each device is separately wound. As an alternative method, a composite film obtained such that a film in which both surfaces are metallized is provided with a second dielectric material by means of the coating method may be wound.

In the case of the capacitor of a laminated type, the mother device wound around a drum having a large diameter or a flat plate is subjected to a heat treatment, fastened with a ring or the like, or subjected to a pressure in a thickness direction of the film, for example, pressed by flat plates in parallel with each other. After that, a step of mounting an external electrode is implemented (by metal frame spraying, conductive resin or the like), and a step of impregnating resins or oil, a step of mounting a lead wire, and a step of finishing an exterior part are implemented if necessary. Then, the capacitor can be finally obtained.

EXAMPLES

Below are defined characteristics and numeral values of sample films obtained in the respective examples and comparative examples, and measuring and evaluation methods thereof.

(Evaluation Method of Characteristic)

1) Thickness of Coating Layer (layer formed from silicone composition)

The sectional surface of the sample film was photographed by a transparent electronic microscope, and the thickness thereof was calculated based on an average value of values obtained at three sectional sections and a measurement magnification.

2) Resistance Value of Metallic Layer

The resistance of the metallic layer between electrodes of 100 mm was measured by the four electrode method, and the measured value was divided by a measured width and an inter-electrode distance, so that the resistance value of the metallic layer by the width of 10 mm and the inter-electrode distance of 10 mm was obtained, and a unit used for the resistance value is $\Omega$/square.

3) Composition of Metallic Film

9 $cm^2$ of the sample film was dissolved in aqua fortis, and then a 20 ml solution was obtained. The compositions of the respective metals in the obtained solution were quantified by means of the ICP emission spectral analysis. SPS1200VR manufactured by Seiko Instruments Inc., was used as an ICP emission spectral analyzing device.

4) Total Thickness of Metallized Film

According to the JIS C 2151, the thickness of ten films overlapped with one another was measured by an electronic micrometer, and an average value of value obtained at five points was divided by the number of the films (10) and used as the film thickness.

5) Self-Healing Property

The sample film was set on a flat-plate electrode having an area of 2,500 $cm^2$ with its metal-deposited surface facing upward so that a flat-plate capacitor was formed. A voltage momentarily increased was applied to the capacitor, and a constant voltage was thereafter applied thereto. The experiment was continued until the dielectric breakdown, which started at sections no longer resistant to the applied voltage, was generated at 20 sections in the film. After the experiment, a clearing property index represented by the following equation was calculated. The self-healing property was determined to be good in the case where the clearing property index was 90% or more.

$$- \text{ clearing property index (\%)} = [(\text{Ti} - (\text{W} + 2\text{T})] \ / \ \text{Ti} \times 100$$

$$\text{measured area: } 225 \ \text{cm}^2$$

Ti: number of generated dielectric breakdowns
W: number of two overlapping dielectric breakdowns
T: number of at least three overlapping dielectric breakdowns
Note: overlapping denotes that the dielectric breakdown is generated again within a radial of the number of the generated dielectric breakdowns generated earlier.

6) Heat Resistance of Capacitor

The capacitor device was dipped in melting solder at 255°C for five seconds so that the rate of change of capacitance was measured. The measured value is represented by $\Delta C/C \times 100$, and the heat resistance was evaluated. C denotes the capacitance before dipping, and $\Delta C$ denotes a value obtained by subtracting the capacitance before dipping from the capacitance after the dipping. The evaluation was given based on the following criteria. The capacitance of the capacitor was measured by an automatic capacitance bridge.

A: $\Delta C \ / \ C \times 100 \geq 0$ very good heat resistance
B: $0 > \Delta C \ / \ C \times 100 \geq -5$ good heat resistance
C: $-5 > \Delta C/C \times 100 \geq -10$ heat resistance in practical range
D: $-10 > \Delta C/C \times 100$ poor heat resistance

7) Melting Temperature

The differential scanning calorimeter, DSC (RDC220), manufactured by Seiko Instruments Inc., was used to measure the melting temperature, and the disk station (SSC/5200) manufactured by the same company was used as a data analyzer. 5 mg of a specimen was heated to reach 340°C from room temperature on an aluminum saucer at a temperate-increase rate of 20°C/min, continuously melted at 340°C for five minutes, and rapidly cooled down to be solidified and retained for five minutes, and then, heated at a temperate-increase rate of 20°C/min from room temperature. A peak temperature of an endoergic peak observed in the melting process was defined as a melting temperature.

EXAMPLE 1

A coating layer formed from a silicone composition (SILICONE X-40-2655A manufactured by Shin-Etsu Chemical Co., Ltd.) was vapor deposited in a thickness of 0. 5 nm on one surface of a polyphenylene sulfide film having a thickness of 6.0 $\mu$m by means of the vacuum vapor deposition. Then, the glow discharge was generated on the surface of the coating layer by means of a pulse DC power source of 250 kHz and 5 kW while a very small quantity of $O_2$ gas was supplied, so that the glow discharge process was performed (processing current density E = 27.8 W·min/m$^2$). After that, aluminum was vapor deposited on the coating-layer side so that the resistance value of the metallic layer was 2 $\Omega$/square, which was taken up by a winding shaft. As a result, an aluminum-vapor deposited film (metallized film for a capacitor) was obtained. The running speed of the polymer film during the vapor deposition was 300 m/min. The amount of the silicone composition to be vapor deposited was controlled by a vapor pressure of the nozzle.
The obtained aluminum-vapor deposited film was cut into thin reels having a width of 20 mm and a margin width of 1 mm. When the thickness of the coating layer of the obtained aluminum-vapor deposited film was measured, it was 0. 5 nm. When the clearing property index of the obtained aluminum-vapor deposited film was measured, it was 91%. Therefore, the self-healing property was good.
The thin reels were wound around a core having an outer diameter of 9 mm, and subjected to processes such as metallized contact and heat treatment, and an electrode terminal was soldered. As a result, dry and bare capacitor devices for evaluation were obtained. These devices were evaluated for the heat resistance according to the above-mentioned method, and as a result, the heat resistance was $\Delta C/C \times 100 = 0$, and was very good.

EXAMPLE 2

The aluminum-vapor deposited film was obtained in a manner similar to that of example 1, except that the thickness of the coating layer was 5 nm. The resistance value of the metallic layer of the obtained aluminum-vapor deposited film was 2 Ω/square, and the thickness of the coating layer was 5 nm. When the clearing property index of the obtained aluminum-deposited film was measured, it was 100% and the self-healing property was good. In the heat-resistance evaluation carried out in a manner similar to example 1, the heat resistance was ΔC/C × 100 = 0, and was very good.

EXAMPLE 3

The aluminum-vapor deposited film was obtained in a manner similar to that of example 1, except that the thickness of the coating layer was 20 nm. The resistance value of the metallic layer of the obtained aluminum-vapor deposited film was 2 Ω/square, and the thickness of the coating layer was 20 nm. When the clearing property index of the obtained aluminum-vapor deposited film was measured, it was100% and the self-healing property was good. In the heat-resistance evaluation carried out in a manner similar to example 1, the heat resistance was ΔC/C × 100 = 0, and was very good.

EXAMPLE 4

The aluminum-vapor deposited film was obtained in a manner similar to that of example 1, except that the thickness of the coating layer was 100 nm. The resistance value of the metallic layer of the obtained aluminum-vapor deposited film was 2 Ω/square, and the thickness of the coating layer was 100 nm. When the clearing property index of the obtained aluminum-vapor deposited film was measured, it was 100% and the self-healing property was good. In the heat-resistance evaluation carried out in a manner similar to example 1, the heat resistance was ΔC/C × 100 = 0, and was very good.

EXAMPLE 5

The aluminum-vapor deposited film was obtained in a manner similar to that of example 1, except that the thickness of the coating layer was 400 nm. The resistance value of the metallic layer of the obtained aluminum-vapor deposited film was 2 Ω/square, and the thickness of the coating layer was 400 nm. When the clearing property index of the obtained aluminum-vapor deposited film was measured, it was 100% and the self-healing property was good. In the heat-resistance evaluation carried out in a manner similar to example 1, the heat resistance was ΔC/C × 100 = 0, and was very good.

EXAMPLE 6

The aluminum-vapor deposited film was obtained in a manner similar to that of example 1, except that the thickness of the coating layer was 600 nm. The resistance value of the metallic layer of the obtained aluminum-vapor deposited film was 2 Ω/square, and the thickness of the coating layer was 600 nm. When the clearing property index of the obtained aluminum-vapor deposited film was measured, it was 100% and the self-healing property was good. In the heat-resistance evaluation carried out in a manner similar to example 1, the heat resistance was ΔC/C × 100 = -3, and was good.

EXAMPLE 7

The aluminum-vapor deposited film was obtained in a manner similar to that of example 1, except that the thickness of the coating layer was 1,000 nm. The resistance value of the metallic layer of the obtained aluminum-vapor deposited film was 2 Ω/square, and the thickness of the coating layer was 1, 000 nm. When the clearing property index of the obtained aluminum-vapor deposited film was measured, it was 100% and the self-healing property was good. In the heat-resistance evaluation carried out in a manner similar to example 1, the heat resistance was ΔC/C × 100 = -10, and was in the practical range.

EXAMPLE 8

A zinc-vapor deposited film was obtained in a manner similar to that of example 1, except that the vapor deposited metal was zinc. The resistance value of the metallic layer of the obtained zinc-vapor deposited film was 2 Ω/square, and the thickness of the coating layer was 20 nm. When the clearing property index of the obtained zinc-vapor deposited film was measured, it was 95% and the self-healing property was good. In the heat-resistance evaluation carried out in a manner similar to example 1, the heat resistance was ΔC/C × 100 = 0, and was very good.

EXAMPLE 9

The aluminum-vapor deposited film was obtained in a manner similar to that of example 1, except that the silicone composition was SILICONE X-41-1805 manufactured by Shin-Etsu Chemicals Co., Ltd. The resistance value of the metallic layer of the obtained aluminum-vapor deposited film was 2 Ω/square, and the thickness of the coating layer was 20 nm. When the clearing property index of the obtained aluminum-vapor deposited film was measured, it was 95% and the self healing property was good. In the heat-resistance evaluation carried out in a manner similar to example 1, the heat resistance was $\Delta C/C \times 100 = 0$, and was very good.

EXAMPLE 10

The aluminum-vapor deposited film was obtained in a manner similar to that of example 1, except that the silicone composition was silicone oil (BY16-152 manufactured by Dow Corning Toray Co., Ltd.). The resistance value of the metallic layer of the obtained aluminum-vapor deposited film was 2 Ω/square, and the thickness of the coating layer was 20 nm. When the clearing property index of the obtained aluminum-vapor deposited film was measured, it was 97% and the self-healing property was good. In the heat-resistance evaluation carried out in a manner similar to example 1, the heat resistance was $\Delta C/C \times 100 = 0$, and was very good.

EXAMPLE 11

The silicone composition (SILICONE X-40-2655A manufactured by Shin-Etsu Chemicals Co., Ltd.) was vapor deposited on a polyethylene terephthalate film having a thickness of 5.4 μm by means of the vacuum vapor deposition so that the thickness of the coating layer was 20 nm. As a result, a film for a capacitor was obtained. After that, aluminum was vapor deposited on the coating-layer side of the film for a capacitor by means of the vacuum vapor deposition, so that the resistance value of the metallic layer was 2 Ω/square. When the thickness of the coating layer of the obtained aluminum-vapor deposited film was measured, the thickness was 20 nm. When the clearing property index of the obtained aluminum-vapor deposited film was measured, it was 100% and the self-healing property was good. In the heat-resistance evaluation carried out in a manner similar to example 1, the heat resistance was $\Delta C/C \times 100 = -3$, and was good.

EXAMPLE 12

The silicone composition (SILICONE X-40-2655A manufactured by Shin-Etsu Chemicals Co., Ltd.) was vapor deposited on a polypropylene film having a thickness of 4.3 μm by means of the vacuum vapor deposition so that the thickness of the coating layer was 20 nm. As a result, a film for a capacitor was obtained. After that, aluminum was vapor deposited on the coating-layer side of the film for a capacitor by means of the vacuum vapor deposition, so that the resistance value of the metallic layer was 2 Ω/square. When the thickness of the coating layer of the obtained aluminum-vapor deposited film was measured, the thickness was 20 nm. When the clearing property index of the obtained aluminum-vapor deposited film was measured, it was 100% and the self-healing property was good. In the heat-resistance evaluation carried out in a manner similar to example 1, the heat resistance was $\Delta C/C \times 100 = -10$, and within the practical range.

EXAMPLE 13

The silicone composition (SILICONE X-40-2655A manufactured by Shin-Etsu Chemicals Co., Ltd.) was vapor deposited on a polyethylene terephthalate film having a thickness of 6.0 μm so that the thickness of the coating layer was 20 nm. As a result, a film for a capacitor was obtained. After that, aluminum was vapor deposited on the coating-layer side of the film for a capacitor by means of the vacuum vapor deposition, so that the resistance value of the metallic layer was 2 Ω/square. When the thickness of the coating layer of the obtained aluminum-vapor deposited film was measured, it was 20 nm. When the clearing property index of the obtained aluminum-vapor deposited film was measured, it was 100% and the self-healing property was good. In the heat-resistance evaluation carried out in a manner similar to example 1, the heat resistance was $\Delta C/C \times 100 = 0$, and was very good.

COMPARATIVE EXAMPLE 1

The aluminum-vapor deposited film was obtained in a manner similar to that of example 1, except that the step of depositing the silicone composition was not performed at all. The resistance value of the metallic layer of the obtained aluminum-vapor deposited film was 2 Ω/square. When the clearing property index of the obtained aluminum-vapor deposited film was measured, it was 75% and the self-healing property was poor. In the heat-resistance evaluation carried out in a manner similar to example 1, the heat resistance was $\Delta C/C \times 100 = 0$, and was very good.

COMPARATIVE EXAMPLE 2

The aluminum-vapor deposited film was obtained in a manner similar to that of example 11, except that the step of depositing the silicone composition was not performed at all. The resistance value of the metallic layer of the obtained aluminum-vapor deposited film was 2 Ω/square. When the clearing property index of the obtained aluminum-vapor deposited film was measured, and it was 84% and was lower than the value obtained in example 9. In the heat-resistance evaluation carried out in a manner similar to example 1, the heat resistance was $\Delta C/C \times 100 = -3$, and was good.

COMPARATIVE EXAMPLE 3

The aluminum-vapor deposited film was obtained in a manner similar to that of example 12, except that the step of depositing the silicone composition was not performed at all. The resistance value of the metallic layer of the obtained aluminum-vapor deposited filmwas 2 Q/square. When the clearing property index of the obtained aluminum-vapor deposited film was measured, it was 87% and was lower than the value obtained in example 10. In the heat-resistance evaluation carried out in a manner similar to example 1, the heat resistance was$\Delta C/C \times 100 = -10$, and within the practical range.

COMPARATIVE EXAMPLE 4

The aluminum-vapor deposited film was obtained in a manner similar to that of example 13, except that the step of depositing the silicone composition was not performed at all. The resistance value of the metallic layer of the obtained aluminum-vapor deposited filmwas 2 Ω/square. When the clearing property index of the obtained aluminum-vapor deposited film was measured, it was 74% and the self-healing property was poor. In the heat-resistance evaluation carried out in a manner similar to example 1, the heat resistance was $\Delta C/C \times 100 = 0$, and was very good. Table 1 shows the measurement and evaluation results in examples and comparative examples.

INDUSTRIAL APPLICABILITY

According to the present invention, a metallized film for a capacitor which is excellent in its self-healing property can be obtained without loss of an excellent heat resistance of a polyphenylene sulfide film or polyethylene naphthalate. The film is suitably used for electric devices of an automobile and a train, controlling engines and motors, an inverter smoothening capacitor, lighting and the like.

**Claims**

1. A metallized film for a capacitor, wherein a coating layer including a silicone composition as a constituent and a metallic layer are laminated on at least one surface of a polymer film in the order from the polymer film side.

2. The metallized film for a capacitor according to Claim 1, wherein
the thickness of the coating layer on one surface is 1 nm to 500 nm.

3. The metallized film for a capacitor according to Claim 1, wherein
a polymer forming the silicone composition includes an organic group having a double bond in a side chain or a part of terminal groups thereof.

4. The metallized film for a capacitor according to Claim 1, wherein
the organic group is a methacrylic group.

5. The metallized film for a capacitor according to Claim 1, wherein
a main constituent of the polymer film is a polymer having a melting temperature of 150°C or more.

6. The metallized film for a capacitor according to Claim 5, wherein
the polymer is polyphenylene sulfide or polyethylene naphthalate.

7. A capacitor comprising the metallized film for a capacitor according to Claim 1.

<div style="text-align:center">**INTERNATIONAL SEARCH REPORT**</div>

| International application No. |
| --- |
| PCT/JP2006/325332 |

**A. CLASSIFICATION OF SUBJECT MATTER**
*H01G4/18*(2006.01)i, *B32B15/08*(2006.01)i

According to International Patent Classification (IPC) or to both national classification and IPC

**B. FIELDS SEARCHED**

Minimum documentation searched (classification system followed by classification symbols)
H01G4/18, B32B15/08

Documentation searched other than minimum documentation to the extent that such documents are included in the fields searched
Jitsuyo Shinan Koho     1922-1996    Jitsuyo Shinan Toroku Koho   1996-2007
Kokai Jitsuyo Shinan Koho   1971-2007    Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 06-338435 A (Matsushita Electric Industrial Co., Ltd.), 06 December, 1994 (06.12.94), Claims; Par. Nos. [0010], [0015], [0034], [0041], [0055] (Family: none) | 1,2,5-7 |
| A | JP 59-003910 A (Toray Industries, Inc.), 10 January, 1984 (10.01.84), Claims; page 2, upper left column, line 18 to lower left column, line 10 (Family: none) | 1-7 |
| A | JP 2006-12555 A (Tokai Rika Co., Ltd.), 12 January, 2006 (12.01.06), Claims; Par. No. [0019] (Family: none) | 1-7 |

☐ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 February, 2007 (21.02.07) | 27 February, 2007 (27.02.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**EP 1 981 045 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63182351 A
- JP 63194318 A
- JP 57187327 A
- JP 63140512 A
- JP 2000218740 A
- JP 3080268 B